(19) Europäisches Patentamt
European Patent Office
Office européen des brevets

(11) **EP 3 656 988 A1**

(12) **EUROPEAN PATENT APPLICATION**

(43) Date of publication:
**27.05.2020 Bulletin 2020/22**

(51) Int Cl.:
***F01D 21/04*** (2006.01)  ***F02C 7/045*** (2006.01)
***F04D 29/52*** (2006.01)

(21) Application number: **19205052.4**

(22) Date of filing: **24.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2018 GB 201819070**

(71) Applicant: **Rolls-Royce plc**
**London N1 9FX (GB)**

(72) Inventors:
• **Donisi, Fabrizio**
**Derby, Derbyshire DE24 8BJ (GB)**
• **Montesinos, Jose Luis**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **FAN CONTAINMENT**

(57) A fan containment arrangement (41) for a gas turbine engine (10) comprising:

a fan containment casing (42); and
a fan track liner (45) radially within the fan containment casing (42) and extending radially inwardly from the fan containment casing (42) to a gas-washed surface delimiting a gas path for a fan (23);
wherein the fan track liner (45) comprises an impact resistant layer (48, 56) formed from titanium or titanium alloy, wherein no greater than about 20 % of the radial thickness of the fan track liner (45) is formed from titanium or titanium alloy, and (i) the fan track liner (45) comprises first and second cellular impact structures (48, 49) separated from one another by a first septum layer (51), the first cellular impact structure (48) being the impact resistant layer (48) formed from titanium or titanium alloy, or (ii) the impact resistant layer (56) formed from titanium or titanium alloy is a septum layer (56), separating the first and second cellular impact structures (53, 54).

*FIG. 5*

## Description

**FIELD OF THE DISCLOSURE**

The present disclosure concerns fan containment arrangements for gas turbine engines and gas turbine engines comprising fan containment arrangements.

**BACKGROUND**

Gas turbine engines include a fan having fan blades in front of the engine. The fan may be contained in a fan containment casing. In a failure event during operation, one of the fan blades may break off from the fan and impact the fan containment casing. This is generally referred to as a fan blade-off (FBO) event. After a turbine engine fan loses a blade, the loads on the fan containment casing rise well above those experienced in normal flight conditions because of the fan impact. It is desirable to provide a fan containment which inhibits propagation of cracks owing to impact during an FBO.

A fan track liner is typically provided on an inboard surface of a fan containment casing. Fan track liners may include one or more layers of cellular material, which may be sandwiched between and bonded to supporting fibre-reinforced laminate layers. Fan track liners are designed to absorb some of the energy of an impacting blade during an FBO event.

United States patent US 4377370 discloses a safety device for a rotating element of a turbine engine. The device comprises a ring that surrounds a stage of blades, upon which is wound an elongated element. The ring is capable of being traversed by a fragment of a ruptured blade or a blade that has been detached and which strikes the elongated element. The windings of the elongated element move to absorb the kinetic energy. The device includes, starting from the innermost layer, an internal envelope, a first ring of segments made of a deformable material, a winding of an elongated element encased in a polymerizable material, a second ring of segments made of a deformable material and a thin external envelope.. The thin envelope is made of a strong and elastic material such as steel, titanium, a fiber reinforced, synthetic resin or the like.

European patent application EP 1336739 A discloses a fan casing for a gas turbine engine that combines the functions of blade containment and noise suppression. The fan casing has an annular metallic inner shell with a plurality of holes formed therethrough. An acoustic absorber, such as a cellular resonator, is disposed around the inner shell. The inner shell 14 may be made from any suitable alloy including but not limited to steel, titanium, or aluminium.

The present disclosure provides an improved fan containment arrangement or at least provides a useful alternative to known fan containment arrangements.

## SUMMARY

The present disclosure provides a fan containment arrangement and a gas turbine engine as set out in the appended claims.

According to a first aspect, there is provided a fan containment arrangement for a gas turbine engine comprising: a fan containment casing; and a fan track liner radially within the fan containment casing and extending radially inwardly from the fan containment casing to a gas-washed surface delimiting a gas path for a fan; wherein the fan track liner comprises an impact resistant layer formed from titanium or titanium alloy, wherein no greater than about 20 % of the radial thickness of the fan track liner is formed from titanium or titanium alloy, and (i) the fan track liner comprises first and second cellular impact structures separated from one another by a first septum layer, the first cellular impact structure being the impact resistant layer formed from titanium or titanium alloy, or (ii) the impact resistant layer formed from titanium or titanium alloy is a septum layer, separating the first and second cellular impact structures.

The fan containment casing may be configured to provide structural support for the fan track liner. The fan containment casing may be a hardwall fan containment casing. The fan containment casing may be a composite fan containment casing, i.e. a fan containment casing formed predominantly from composite materials. For example, the fan containment casing may be formed predominantly from fibre-reinforced polymeric materials such as carbon fibre reinforced polymeric materials.

The fan track liner may be provided on a radially inboard surface of the fan containment casing. The fan track liner may be mounted on the radially inboard surface of the fan containment casing. The fan track liner may be adhered to or bonded to the radially inboard surface of the fan containment casing. The fan track liner may be integrally formed with the fan containment casing, e.g. integrally formed with the fan containment casing on the radially inboard side.

The fan track liner may function in use as a fan impact liner in the fan containment arrangement, i.e. the fan track liner may be a fan impact liner. The fan containment arrangement may further comprise a sound suppression liner. The sound suppression liner may be provided forward or aft of the fan track liner (i.e. the fan impact liner). The fan containment arrangement may comprise two sound suppression liners, one sound suppression liner being provided forward of the fan track liner (i.e. the fan impact liner) and the other sound suppression liner being provided aft of the fan track liner (i.e. the fan impact liner).

The fan containment casing may include, along an axial extent thereof, a forward portion, a middle portion and an aft portion. The axial extent of the fan containment casing may correspond to the axial location of a fan when the fan containment casing is installed in a gas turbine engine. The forward portion and the aft portion may be thinner than the middle portion. Each of the forward portion and the aft portion may be reduced in thickness with distance away from the middle portion. The fan track liner may be provided on the radially inboard surface of the fan containment casing in the middle portion. The fan track liner may be selectively located on the radially inboard surface of the fan containment casing at a portion of the fan containment casing configured to surround the fan. The fan track liner may be selectively located in a projected path of a fan blade during an FBO event. The fan track liner may be selectively located on the radially inboard surface of the fan containment casing at an impact region, i.e. at least one impact region most likely to be impacted by a fan blade during an FBO event.

Titanium and titanium alloys are generally stronger (in terms of ultimate tensile strength and yield strength) than other materials commonly used in aerospace applications, and in particular stronger than other materials commonly used in the construction of fan track liners, for example aluminium, polymeric materials or fibre-reinforced polymeric materials. For example, titanium alloys can have ultimate tensile strengths exceeding 1400 MPa, whereas aluminium alloys generally have ultimate tensile strengths of around 500 MPa. However, titanium and titanium alloys are generally denser than the materials commonly used in the construction of fan track liners. For example, the density of pure titanium at room temperature is about 4.5 g/cm³, whereas the density of aluminium is about 2.7 g/cm³ and the density of carbon fibre reinforced polymers is typically in the range of 1.5 g/cm³ to 2.0 g/cm³. Use of titanium and titanium alloys in the construction of fan track liners has therefore generally been avoided in order to avoid excessive component weight increases. However, the inventors have surprisingly found that titanium and titanium alloys can be incorporated into fan track liners without excessive weight gain, as long as no greater than about 20 % of the radial thickness of the fan track liner is formed from the titanium or titanium alloy. This enables the fan track liner to benefit from the higher strength of titanium and titanium alloys.

The impact resistant layer may function as a ballistic barrier. The impact resistant layer may be configured to slow down an impacting projectile (such as an impacting fan blade during an FBO event) and to reduce the likelihood of the impacting projectile penetrating the fan containment casing. The impact resistant layer may be configured to retain an impacting projectile (such as an impacting fan blade) within the fan track liner, so as to avoid the projectile bouncing back from the fan track liner and being expelled from the engine. The impact resistant layer may be configured to retain the impacting projectile within the fan track liner until it is swept back into the engine by passing fan blades.

It may be that the impact resistant layer formed from titanium or titanium alloy is a cellular impact structure formed from titanium or titanium alloy.

The cellular impact structure formed from titanium or titanium alloy may be a honeycomb structure. The honeycomb structure may comprise a plurality of cells formed between cell walls. The cells may be substantially hollow. The honeycomb structure may be described as a network of connected cell walls at least partially enclosing a plurality of cells, for example, substantially hollow cells. The cell walls may be thin relative to the cell dimensions. For example, the cell walls may have a thickness no greater than 10 %, for example, no greater than 5 %, or no greater than 1%, of a characteristic cell dimension, for example, a cell width. The cell walls may also be thin relative to a thickness of the cellular impact structure. The cells may be arranged regularly on a lattice. The cells may be columnar. The cells may be columnar and arranged substantially parallel to one another, i.e. such that the longitudinal axis of each columnar cell is substantially parallel to the longitudinal axis of each other columnar cell.

The honeycomb structure may be a hexagonal honeycomb structure. The honeycomb structure may comprise columnar cells which are hexagonal in cross-section. The honeycomb structure may be an expanded honeycomb structure (i.e. an "over-expanded" honeycomb structure), a reinforced hexagonal honeycomb structure (i.e. a primarily hexagonal honeycomb structure reinforced by additional cell walls), a rectangular honeycomb structure, or a square honeycomb structure.

The honeycomb structure may comprise a periodic repeating pattern of cell walls. The repeating pattern may be regular. The repeating pattern may be hierarchical. The repeating pattern may form cells having two or more, or three or more, or four or more, different cell shapes.

The cellular impact structure formed from titanium or titanium alloy may have a density of no greater than about 400 kg/m³, for example, no greater than about 300 kg/m³, or no greater than about 250 kg/m³, or no greater than about 200 kg/m³. The cellular impact structure formed from titanium or titanium alloy may have a density of no less than about 10 kg/m³, for example, no less than about 25 kg/m³, or no less than about 50 kg/m³, or no less than about 75 kg/m³. The cellular impact structure formed from titanium or titanium alloy may have a density of from about 10 kg/m³ to about 400 kg/m³, for example, from about 25 kg/m³ to about 300 kg/m³, or from about 25 kg/m³ to about 250 kg/m³, or from about 50 kg/m³ to about 250 kg/m³, or from about 50 kg/m³ to about 200 kg/m³, or from about 75 kg/m³ to about 200 kg/m³.

A relative density, R, of the cellular impact structure formed from titanium or titanium alloy may be defined as

$$R = \frac{\rho^*}{\rho}$$

wherein $\rho^*$ is the density of the cellular impact structure

and $\rho$ is the density of the solid material from which the cellular impact structure is formed. The cellular impact structure formed from titanium or titanium alloy may have a relative density, $R$, of no greater than about 0.5, for example, no greater than about 0.4, or no greater than about 0.3, or no greater than about 0.2, or no greater than about 0.1.

It may be that the cellular impact structure formed from titanium or titanium alloy has an average cell diameter (i.e. cell size) of no greater than about 20 mm, for example, no greater than about 15 mm, or no greater than about 10 mm, or no greater than about 7 mm, or no greater than about 5 mm, or no greater than about 4 mm. It may be that the cellular impact structure formed from titanium or titanium alloy has an average cell diameter of no less than about 0.1 mm, for example, no less than about 1 mm, or no less than about 2 mm, or no less than about 3 mm. It may be that the cellular impact structure has an average cell diameter of from about 0.1 mm to about 20 mm, for example, from about 1 mm to about 15 mm, or from about 1 mm to about 10 mm, or from about 3 mm to about 10 mm, or from about 2 mm to about 7 mm, or from about 2 mm to about 5 mm, or from about 3 mm to about 7 mm, or from about 3 mm to about 5 mm, or from about 2 mm to about 4 mm, or from about 3 mm to about 4 mm. It may be that the cellular impact structure formed from titanium or titanium alloy has an average cell diameter (i.e. cell size) of about 1/8 (i.e. 0.125) inches (i.e. about 3.175 mm).

For a cellular impact structure having a honeycomb structure having columnar cell walls, a maximum in-plane cell diameter may be defined as the maximum straight line distance between opposing cell walls measured in cross-section through the cell perpendicular to the cell walls. For a cellular impact structure having a honeycomb structure having columnar cell walls, a minimum in-plane cell diameter may be defined as the minimum straight line distance between opposing cell walls measured in cross-section through the cell perpendicular to the cell walls.

It may be that the cellular impact structure formed from titanium or titanium alloy has a maximum in-plane cell diameter of no greater than about 20 mm, for example, no greater than about 15 mm, or no greater than about 10 mm, or no greater than about 7 mm, or no greater than about 5 mm, or no greater than about 4 mm. It may be that the cellular impact structure formed from titanium or titanium alloy has a maximum in-plane cell diameter of no less than about 0.1 mm, for example, no less than about 1 mm, or no less than about 2 mm, or no less than about 3 mm. It may be that the cellular impact structure formed from titanium or titanium alloy has a maximum in-plane cell diameter of from about 0.1 mm to about 20 mm, for example, from about 1 mm to about 15 mm, or from about 1 mm to about 10 mm, or from about 3 mm to about 10 mm, or from about 2 mm to about 7 mm, or from about 2 mm to about 5 mm, or from about 3 mm to about 7 mm, or from about 3 mm to about 5 mm, or from about 2 mm to about 4 mm, or from about 3 mm to about 4 mm.

It may be that the cellular impact structure formed from titanium or titanium alloy has a minimum in-plane cell diameter of no greater than about 20 mm, for example, no greater than about 15 mm, or no greater than about 10 mm, or no greater than about 7 mm, or no greater than about 5 mm, or no greater than about 4 mm. It may be that the cellular impact structure formed from titanium or titanium alloy has a minimum in-plane cell diameter of no less than about 0.1 mm, for example, no less than about 1 mm, or no less than about 2 mm, or no less than about 3 mm. It may be that the cellular impact structure formed from titanium or titanium alloy has a minimum in-plane cell diameter of from about 0.1 mm to about 20 mm, for example, from about 1 mm to about 15 mm, or from about 1 mm to about 10 mm, or from about 3 mm to about 10 mm, or from about 2 mm to about 7 mm, or from about 2 mm to about 5 mm, or from about 3 mm to about 7 mm, or from about 3 mm to about 5 mm, or from about 2 mm to about 4 mm, or from about 3 mm to about 4 mm.

It may be that the cellular impact structure formed from titanium or titanium alloy has a cell wall thickness (i.e. a "foil thickness") of no greater than about 0.01 inches (i.e. about 0.254 mm), for example, no greater than about 0.008 inches (i.e. about 0.2032 mm), or no greater than about 0.006 inches (i.e. about 0.1524 mm), or no greater than about 0.005 inches (i.e. about 0.127 mm), or no greater than about 0.004 inches (i.e. about 0.1016 mm), or no greater than about 0.003 inches (i.e. about 0.0762 mm). It may be that the cellular impact structure formed from titanium or titanium alloy has a cell wall thickness of no less than about 0.0005 inches (i.e. about 0.0127 mm), for example, no less than about 0.001 inches (i.e. about 0.0254 mm), or no less than about 0.002 inches (i.e. about 0.0508 mm), or no less than about 0.003 inches (i.e. about 0.0762 mm). It may be that the cellular impact structure formed from titanium or titanium alloy has a cell wall thickness of from about 0.0005 inches (i.e. about 0.0127 mm) to about 0.01 inches (i.e. about 0.254 mm), for example, from about 0.001 inches (i.e. about 0.0254 mm) to about 0.008 inches (i.e. about 0.2032 mm), or from about 0.002 inches (i.e. about 0.0508 mm) to about 0.006 inches (i.e. about 0.1524 mm), or from about 0.002 inches (i.e. about 0.0508 mm) to about 0.005 inches (i.e. about 0.127 mm), or from about 0.002 inches (i.e. about 0.0508 mm) to about 0.004 inches (i.e. about 0.1016 mm), or from about 0.002 inches (i.e. about 0.0508 mm) to about 0.003 inches (i.e. about 0.0762 mm), or from about 0.003 inches (i.e. about 0.0762 mm) to about 0.005 inches (i.e. about 0.127 mm), or from about 0.003 inches (i.e. about 0.0762 mm) to about 0.004 inches (i.e. about 0.1016 mm).

The cellular impact structure formed from titanium or titanium alloy may comprise substantially hollow cells. It may be that the majority (for example, all) of the cells in the cellular impact structure are substantially hollow.

It may be that some, for example, the majority (e.g., all), of the cells in the cellular impact structure formed from titanium or titanium alloy are filled with gas. For example, it may be that some, for example, the majority (e.g., all), of the cells in the cellular impact structure formed from titanium or titanium alloy are filled with air. It may be that at least some, for example, the majority, or substantially all, of the cells of the cellular impact structure formed from titanium or titanium alloy are gas-filled cells, for example, air-filled cells.

It may be that the cellular impact structure formed from titanium or titanium alloy constitutes no greater than about 20 %, for example, no greater than about 17.5 %, or no greater than about 15 %, of the radial thickness of the fan track liner. It may be that the cellular impact structure formed from titanium or titanium alloy constitutes no less than about 1 %, for example, no less than about 5 %, or no less than about 10 %, of the radial thickness of the fan track liner. It may be that the cellular impact structure formed from titanium or titanium alloy constitutes from about 1 % to about 20 %, for example, from about 5 % to about 17.5 %, or from about 10 % to about 20 %, or from about 10 % to about 17.5 %, or from about 10 % to about 15 %, of the radial thickness of the fan track liner.

It may be that the radial thickness of the cellular impact structure formed from titanium or titanium alloy is no greater than about 20 mm, for example, no greater than about 15 mm, or no greater than about 10 mm, or no greater than about 8 mm, or no greater than about 7 mm. It may be that the radial thickness of the cellular impact structure formed from titanium or titanium alloy is no less than about 2 mm, for example, no less than about 3 mm, or no less than about 4 mm, or no less than about 5 mm, or no less than about 6 mm. It may be that the radial thickness of the cellular impact structure is from about 2 mm to about 20 mm, for example, from about 3 mm to about 15 mm, or from about 3 mm to about 10 mm, or from about 4 mm to about 8 mm, or from about 5 mm to about 7 mm. It may be that the radial thickness of the cellular impact structure formed from titanium or titanium alloy is about 6.6 mm.

It may be the fan track liner comprises first and second cellular impact structures. The first and second cellular impact structures may be separated from one another by a first septum layer. The first cellular impact structure may be the impact resistant layer formed from titanium or titanium alloy. Accordingly, the first cellular impact structure may have any property described herein with reference to the cellular impact structure formed from titanium or titanium alloy. The second cellular impact structure may be formed from a material other than titanium or titanium alloy.

It may be that one or each of the first cellular impact structure and the second cellular impact structure is a honeycomb structure. For the avoidance of doubt, either or both of the first cellular impact structure and the second cellular impact structure may have any of the properties of a honeycomb structure described hereinabove with reference to the cellular impact structure formed of titanium or titanium alloy.

The second cellular impact structure may be formed of a material having a lower strength (e.g. a lower ultimate tensile strength and/or a lower yield strength) than the titanium or titanium alloy from which the first cellular impact structure is formed. The second cellular impact structure may be formed from a fire retardant material. The second cellular impact structure may be formed from a metal such as aluminium or aluminium alloy. Alternatively, the second cellular impact structure may be formed from a polymeric material such as an aramid polymeric material (e.g. an aromatic polyamide such as a para-aramid (e.g. KEVLAR® heat-resistant synthetic fibre material manufactured by DuPont) or a meta-aramid (e.g. NOMEX® flame-resistant meta-aramid material manufactured by DuPont), for example an aramid paper coated in resin. Alternatively, the second cellular impact structure may be formed from a fibre-reinforced polymeric material such as fibreglass or carbon fibre reinforced polymer.

It may be that the first cellular impact structure is a radially outboard cellular impact structure and that the second cellular impact structure is a radially inboard cellular impact structure. It may be the radially outboard cellular impact structure formed of titanium or titanium alloy functions as an impact resistant wall between more radially inboard portions of the fan track liner and the radially outboard fan containment casing. It may be that deformation of the radially inboard second cellular impact structure on impact of a projectile results in absorption of a substantial amount of the projectile's kinetic energy, slowing the projectile down before it impacts and is stopped by the stronger, but generally thinner, radially outboard first cellular impact structure. By arranging the stronger (and generally stiffer) first cellular impact structure outboard of the weaker (and generally less stiff second cellular impact structure), the likelihood of an impacting projectile cutting through the first cellular impact structure (rather than crushing the first cellular impact structure) is reduced. Accordingly, the overall effectiveness of the fan containment arrangement to arrest impacting projectiles is improved.

When a load is applied to a cellular material such as a honeycomb structure, it typically undergoes three stages of deformation. First, the cellular material will typically yield elastically. Second, with increasing strain (for example, above about 5 % strain, dependent on the material), the cell walls in the cellular structure will proceed to buckle and collapse (i.e. undergoing plastic deformation) at a relatively constant stress until, for example, about 50 % strain. The stress at which the deformation of the cellular material transitions from elastic to plastic strain is commonly referred to as the "crush strength" of the material. Third, with ever increasing strain, the cellular material typically enters a densification regime in which cell walls contact one another and stress increases rapidly with strain.

It may be that the second cellular impact structure constitutes no greater than about 95 %, for example, no greater than about 90%, or no greater than about 85 %, or no greater than about 80 %, of the radial thickness of the fan track liner. It may be that the second cellular impact structure constitutes no less than about 40 %, for example, no less than about 50 %, or no less than about 60 %, or no less than about 65 %, or no less than about 70 %, of the radial thickness of the fan track liner. It may be that the second cellular impact structure constitutes from about 40 % to about 95 %, for example, from about 50 % to about 90 %, or from about 60 % to about 90 %, or from about 65 % to about 85 %, or from about 70 % to about 80 %, of the radial thickness of the fan track liner.

It may be that the radial thickness of the second cellular impact structure is no greater than about 60 mm, for example, no greater than about 50 mm, or no greater than about 45 mm, or no greater than about 40 mm, or no greater than about 38 mm. It may be that the radial thickness of the second cellular impact structure is no less than about 20 mm, for example, no less than about 25 mm, or no less than about 30 mm, or no less than about 35 mm, or no less than about 37 mm. It may be that the radial thickness of the second cellular impact structure is from about 20 mm to about 60 mm, for example, from about 25 mm to about 50 mm, or from about 30 mm to about 45 mm, or from about 30 mm to about 40 mm, or from about 35 mm to about 40 mm, or from about 35 mm to about 38 mm, or from about 37 mm to about 40 mm, or from about 37 mm to about 38 mm.

It may be that the second cellular impact structure has a cell wall thickness (i.e. a "foil thickness") of no greater than about 0.01 inches (i.e. about 0.254 mm), for example, no greater than about 0.008 inches (i.e. about 0.2032 mm), or no greater than about 0.006 inches (i.e. about 0.1524 mm), or no greater than about 0.005 inches (i.e. about 0.127 mm), or no greater than about 0.004 inches (i.e. about 0.1016 mm), or no greater than about 0.003 inches (i.e. about 0.0762 mm). It may be that the second cellular impact structure has a cell wall thickness of no less than about 0.0005 inches (i.e. about 0.0127 mm), for example, no less than about 0.001 inches (i.e. about 0.0254 mm), or no less than about 0.002 inches (i.e. about 0.0508 mm), or no less than about 0.003 inches (i.e. about 0.0762 mm). It may be that the second cellular impact structure has a cell wall thickness of from about 0.0005 inches (i.e. about 0.0127 mm) to about 0.01 inches (i.e. about 0.254 mm), for example, from about 0.001 inches (i.e. about 0.0254 mm) to about 0.008 inches (i.e. about 0.2032 mm), or from about 0.002 inches (i.e. about 0.0508 mm) to about 0.006 inches (i.e. about 0.1524 mm), or from about 0.002 inches (i.e. about 0.0508 mm) to about 0.005 inches (i.e. about 0.127 mm), or from about 0.002 inches (i.e. about 0.0508 mm) to about 0.004 inches (i.e. about 0.1016 mm), or from about 0.002 inches (i.e. about 0.0508 mm) to about 0.003 inches (i.e. about 0.0762 mm), or from about 0.003 inches (i.e. about 0.0762 mm) to about 0.005 inches (i.e. about 0.127 mm), or from about 0.003 inches (i.e. about 0.0762 mm) to about 0.004 inches (i.e. about 0.1016 mm).

It may be that the first cellular impact structure constitutes from about 5 % to about 20 %, for example from about 10 % to about 15 %, of the radial thickness of the fan track liner and that the second cellular impact structure constitutes from about 60 % to about 90 %, for example from about 70 % to about 80 %, of the radial thickness of the fan track liner.

It may be that the first and second cellular impact structures have different cell densities. It may be that the cell density of the first cellular impact structure is higher than the cell density of the second cellular impact structure. It may be that the first and second cellular impact structures have different cell geometries.

It may be that the first cellular impact structure is adhered directly to the fan containment casing, for example by way of a cured epoxy adhesive.

The first septum layer may be non-cellular. The first septum layer may be a solid layer of fibre-reinforced polymeric material such as fibreglass or carbon fibre reinforced polymeric material. The first septum layer may have a radial thickness of from about 0.1 mm to about 1 mm, for example, about 0.5 mm.

The fan containment arrangement may further comprise an abradable structure. The abradable structure may be separated from the second cellular impact structure by a second septum layer.

The abradable structure may formed on a radially inboard-most face of the fan track liner. The abradable structure may be configured to be abraded by the movement of fan blades during operation of the engine, to provide a close fit between the fan containment arrangement and the fan blades and to minimise air leakage around the fan blade tips. The abradable structure made have a cellular structure, i.e. the abradable structure may be a cellular abradable structure. The cellular abradable structure may have a foam structure. The cellular abradable structure may have honeycomb structure. Cells of the cellular abradable structure may be filled. For example, the cellular abradable structure may comprise a honeycomb structure formed from a first polymeric material (such as an aramid polymeric material, for example NOMEX® flame-resistant meta-aramid material) and filled with a second polymeric material (such as a cured epoxy resin, for example in the form of a cured epoxy resin foam). The abradable structure may have a radial thickness of from about 4 mm to about 8 mm, for example about 6 mm.

The second septum layer may be non-cellular. The second septum layer may be a solid layer of fibre-reinforced polymeric material such as fibreglass or carbon fibre reinforced polymeric material. The second septum layer may have a radial thickness of from about 0.1 mm to about 5 mm, for example, from about 0.5 mm to about 3 mm. For example, it may be that the second cellular impact structure is formed from a metal such as aluminium and the second septum layer has a radial thickness of from about 0.1 mm to about 1 mm, for example, about 0.5 mm. Alternatively, it may be that the second cellular impact structure is formed from a polymeric material such as an aramid polymeric material and the second septum layer has a radial thickness of from about 1 mm to about 5 mm, for example about 3 mm.

As an alternative to embodiments in which the impact resistant layer formed from titanium or titanium alloy is a cellular impact structure formed from titanium or titanium alloy, it may be that the impact resistant layer formed from titanium or titanium alloy is a septum layer formed from titanium or titanium alloy. The septum layer formed from titanium or titanium alloy may separate first and second cellular impact structures.

The septum layer formed from titanium or titanium alloy may be a sheet of titanium or titanium alloy. The septum layer formed from titanium or titanium alloy (e.g. the sheet of titanium or titanium alloy) may have a radial thickness of no greater than about 10 mm, for example, no greater than about 7.5 mm, or no greater than about 5 mm, or no greater than about 2.5 mm, or no greater than about 1 mm, or no greater than about 0.8 mm, or no greater than about 0.5 mm. The septum layer formed from titanium or titanium alloy (e.g. the sheet of titanium or titanium alloy) may have a radial thickness of no less than about 0.1 mm, for example, no less than about 0.2 mm, or no less than about 0.3 mm. The septum layer formed from titanium or titanium alloy (e.g. the sheet of titanium or titanium alloy) may have a radial thickness from about 0.1 mm to about 10 mm, for example, from about 0.1 mm to about 7.5 mm, or from about 0.1 mm to about 5 mm, or from about 0.2 mm to about 5 mm, or from about 0.3 mm to about 5 mm, or from about 0.1 mm to about 2.5 mm, or from about 0.2 mm to about 2.5 mm, or from about 0.3 mm to about 2.5 mm, or from about 0.1 mm to about 1 mm, or from about 0.2 mm to about 1 mm, or from about 0.3 mm to about 1 mm, or from about 0.1 mm to about 0.8 mm, or from about 0.2 mm to about 0.8 mm, or from about 0.3 mm to about 0.8 mm, or from about 0.1 mm to about 0.5 mm, or from about 0.2 mm to about 0.5 mm, or from about 0.3 mm to about 0.5 mm. The septum layer formed from titanium or titanium alloy (e.g. the sheet of titanium or titanium alloy) may have a radial thickness of about 0.5 mm.

The septum layer formed from titanium or titanium alloy (e.g. the sheet of titanium or titanium alloy) may constitute no greater than about 10 %, for example, no greater than about 5 %, or no greater than about 3 %, or no greater than about 1 %, of the radial thickness of the fan track liner. The septum layer formed from titanium or titanium alloy (e.g. the sheet of titanium or titanium alloy) may constitute no less than about 0.01 %, for example, no less than about 0.05 %, or no less than about 0.1 %, or no less than about 0.5 %, of the radial thickness of the fan track liner. The septum layer formed from titanium or titanium alloy (e.g. the sheet of titanium or titanium alloy) may constitute from about 0.01 % to about 10 %, for example, from about 0.01 % to about 5 %, or from about 0.01 % to about 3 %, or from about 0.01 % to about 1 %, or from about 0.05 % to about 3 %, or from about 0.05 % to about 1 %, or from about 0.1 % to about 3 %, or from about 0.1 % to about 1 %, or from about 0.5 % to about 3 %, or from about 0.5 % to about 1 %, of the radial thickness of the fan track liner.

One or both of the first and second cellular impact structures may be formed from a material other than titanium or titanium alloy. For example, one or both of the first and second cellular impact structures may be formed from metal (such as aluminium or aluminium alloy), polymeric material (such as an aramid polymeric material, for example KEVLAR® heat-resistant synthetic fibre material or NOMEX® flame-resistant meta-aramid material) or fibre-reinforced polymeric material (such as fibreglass or carbon fibre reinforced polymeric material).

It will be appreciated that throughout this specification and the appended claims, references to "titanium" are references to unalloyed titanium. However, it will be appreciated that unalloyed titanium is not necessarily pure elemental titanium and that unalloyed titanium may include unavoidable traces of elements such as oxygen, hydrogen, iron, magnesium, manganese or chlorine. Unalloyed titanium may be commercially pure (CP) titanium, for example CP titanium containing no more than 1 wt.%, 0.1 wt.%, 0.01 wt.% or 0.001 wt.% impurities (i.e. 99 wt.%, 99.9 wt.%, 99.99 wt.% or 99.999 wt.% CP titanium).

It will further be appreciated that references to "titanium alloy" are references to alloys of titanium containing one or more additional elements at levels exceeding impurity levels. For example, titanium is commonly alloyed with aluminium, vanadium, palladium, molybdenum and/or nickel.

It may be that the impact resistant layer is formed from a titanium alloy comprising (i.e. consisting predominantly of) titanium, aluminium and vanadium (as well as trace amounts of any unavoidable impurities). For example, it may be that the impact resistant layer is formed from Ti-3Al-2.5V (i.e. an alloy comprising from about 93 wt. % to about 95.5 wt. % titanium, from about 2.5 wt. % to about 3.5 wt. % aluminium and from about 2 wt. % to about 3 wt. % vanadium, the balance being impurities and commonly a small amount of palladium (e.g. about 0.04 wt. % to about 0.08 wt. % palladium)) or Ti-6Al-4V (i.e. an alloy comprising about 90 wt. % titanium, about 6 wt. % aluminium and about 4 wt. % vanadium, the balance being impurities).

The impact resistant layer may be formed from a near-alpha titanium alloy (i.e. an alloy containing predominantly hexagonal close-packed phase with small amounts of body centred cubic phase, typically containing less than 2 wt. % of beta phase stabilising elements) or an alpha-beta titanium alloy (i.e. an alloy containing a combination of hexagonal close-packed and body centred cubic phases).

It may be that titanium or titanium alloy constitutes no greater than about 40 %, for example, no greater than about 30 %, or no greater than about 20 %, or no greater than about 15 %, or no greater than about 10 %, or no greater than about 5 %, of the total weight of the fan track liner. For example, it may be that the impact resistant layer formed from titanium or titanium alloy constitutes no greater than about 40 %, for example, no greater than about 30 %, or no greater than about 20 %, or no greater than about 15 %, or no greater than about 10 %, or no greater than about 5 %, of the total weight of the fan track liner.

In embodiments having a cellular impact structure formed from titanium or titanium alloy, it may be that the cellular impact structure formed from titanium or titanium alloy constitutes no greater than about 40 %, for example, no greater than about 30 %, or no greater than about 20 %, or no greater than about 15 %, or no greater than about 10 %, or no greater than about 5 %, of the total weight of the fan track liner.

In embodiments having a septum layer formed from titanium or titanium alloy, it may be that the septum layer formed from titanium or titanium alloy constitutes no greater than about 20 %, or no greater than about 15 %, or no greater than about 10 %, or no greater than about 5 %, of the total weight of the fan track liner.

It may be that the fan containment arrangement comprises: the fan containment casing; and the fan track liner radially within the fan containment casing and extending radially inwardly from the fan containment casing to a gas-washed surface delimiting a gas path for a fan; wherein the fan track liner comprises: a first cellular impact structure formed from titanium or titanium alloy, the first cellular impact structure constituting from about 5 to 20 %, for example from about 10 to 15 %, of the radial thickness of the fan track liner; a second cellular impact structure formed from aluminium, aluminium alloy or polymeric material, the second cellular impact structure constituting from about 60 % to about 90 %, for example from about 70 % to about 80 %, of the radial thickness of the fan track liner; a first septum layer formed from composite material separating the first and second cellular impact structures; a cellular abradable structure formed from a first polymeric material, optionally filled with a second polymeric material; and a second septum layer formed from composite material separating the second cellular impact structure and the cellular abradable structure.

In a second aspect, there is provided a gas turbine engine comprising the fan containment arrangement according to the first aspect. The fan containment arrangement may enclose a fan.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

**BRIEF DESCRIPTION OF THE DRAWINGS**

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a schematic sectional side view of a fan containment arrangement;

Figure 5 is a schematic sectional view through a portion of a first example fan track liner; and

Figure 6 is a schematic sectional view through a portion of a second example fan track liner.

**DETAILED DESCRIPTION**

Aspects and embodiments of the present disclosure will now be discussed with reference to the accompanying figures. Further aspects and embodiments will be apparent to those skilled in the art.

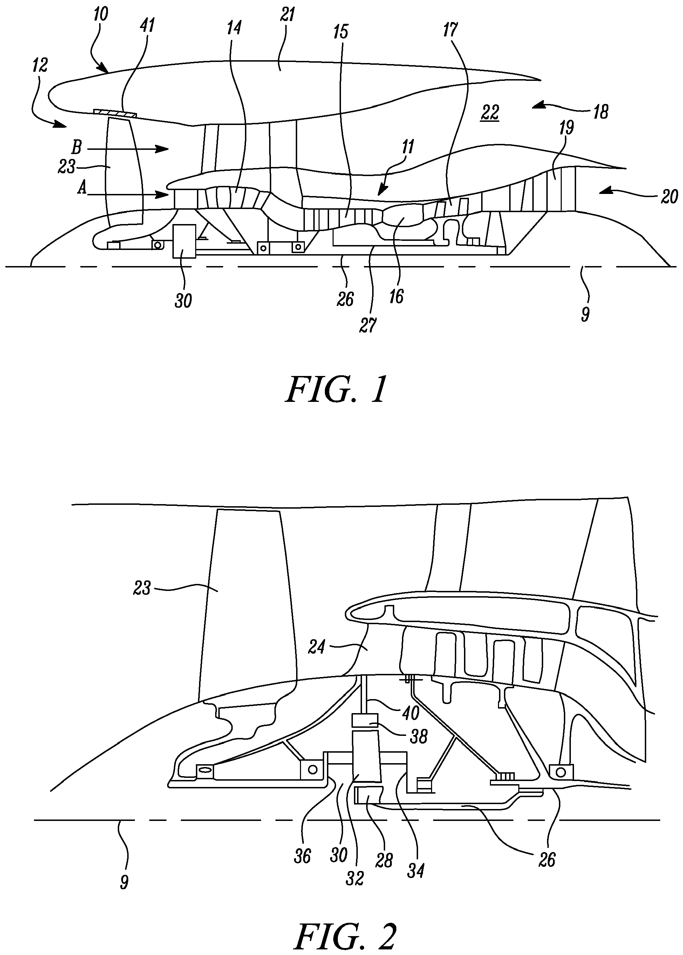

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30. A fan containment arrangement 41 extends around the fan 23 inboard the nacelle 21.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

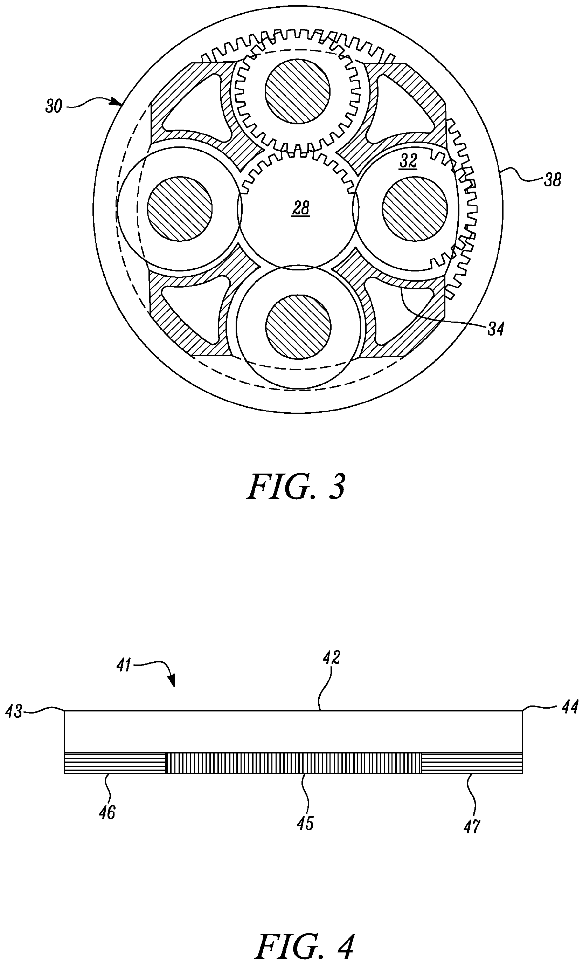

The epicyclic gearbox 30 is shown by way of example in greater detail in **Figure 3.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure.

Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The structure of the fan containment arrangement 41 is illustrated schematically in **Figure 4** which shows a sectional view of one portion of the fan containment arrangement in a radial plane intersecting the engine centreline. The fan containment arrangement 41 comprises a fan containment casing 42 which extends between a forward end 43 and an aft end 44. The fan containment casing 42 is formed predominantly from fibre-reinforced composite material, for example carbon-fibre reinforced polymer (CFRP). A fan impact liner 45 is adhered or otherwise secured to an inboard surface of the fan containment casing 42 intermediate the forward and aft ends. The fan impact liner 45 is formed from layers of fibre-reinforced composite material and honeycomb material, as explained in more detail below, and is configured to absorb a substantial amount of energy on impact of a blade during a fan blade-off (FBO) event. Forward and aft acoustic liners 46 and 47 are adhered to the fan containment casing 42 proximate the forward 43 and aft 44 ends respectively. The fan containment casing 42 acts as a rigid structural support for the fan impact liner 45 and the forward and aft acoustic liners 46 and 47.

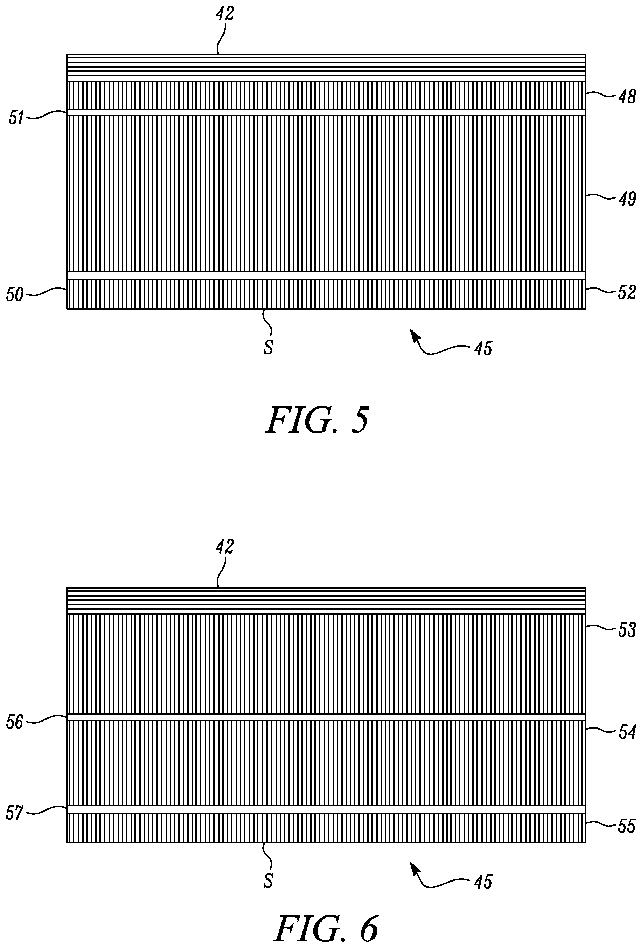

The structure of the fan impact liner 45, in a first example embodiment, is illustrated schematically in **Figure 5** which shows a sectional view of one portion of the fan impact liner 45 adhered to the fan containment casing 42. The fan impact liner 45 includes three different layers (48, 49 and 50) of hexagonal honeycomb material: a radially outer honeycomb layer, a radially intermediate honeycomb layer 49, and a radially inner honeycomb layer.

Radially outer honeycomb layer 48 is formed from titanium or a titanium alloy such as Ti-3Al-2.5V or Ti-6Al-4V and, in this example, accounts for about 10 % to about 15 % of the total radial thickness of the fan impact liner 45. For example, the honeycomb layer 48 may be about 6.6 mm thick.

Radially intermediate honeycomb layer 49 is formed from aluminium or aluminium alloy and, in this example, accounts for about 70 % to about 80 % of the total radial thickness of the fan impact liner 45. For example, the honeycomb layer 49 may be about 38 mm thick. A suitable example aluminium honeycomb material has a cell size of 1/8 inch (i.e. about 3.175 mm) and a foil thickness of 0.003 inches (i.e. about 0.0762 mm), but cell sizes between about 0.004 inches (i.e. about 0.1 mm) and about 0.8 inches (i.e. about 20.3 mm), and foil thicknesses between about 0.0005 inches (i.e. about 0.013 mm) and about 0.01 inches (i.e. about 0.25 mm), are possible.

Radially inner honeycomb layer 50 is formed from an aramid polymeric material such as NOMEX® flame-resistant meta-aramid material, the cells of the honeycomb being filled with a cured epoxy resin (such as those available in the Scotch-Weld line available from 3M). The honeycomb layer 50 may be about 6 mm thick. Radially inner honeycomb layer 50 is an abradable layer having a gas-washed exterior surface S which faces the fan blades 23. In use, the fan blade is "run-in" to cut a track in the abradable layer for good clearance.

In this example, the honeycomb layer 48 is adhered directly to the fan containment casing 42 by a layer of cured epoxy adhesive (not shown). The radially outer and intermediate honeycomb layers 48 and 49 are separated from one another by an intervening composite outer septum layer 51 formed from two carbon-fibre reinforced plies suspended in an epoxy resin matrix, the outer septum layer having a thickness of about 0.5 mm. Both the radially outer and intermediate honeycomb layers 48 and 49 are adhered to the septum layer 51 by a cured epoxy adhesive. The intermediate and inner honeycomb layers 49 and 50 are also separated from one another by an intervening composite inner septum layer 52 formed from twelve carbon-fibre reinforced plies suspended in an epoxy resin matrix (having a total thickness of about 3 mm), and again both the intermediate and inner honeycomb layers 49 and 50 are adhered to the septum layer 52 by a cured epoxy adhesive.

It will be apparent to the skilled person that many of the materials used in the construction of the fan impact liner shown in Figure 5 may be varied without departing from the general structure of the liner. For example, the honeycomb layers 48, 49 and 50 may take any suitable honeycomb structures other than hexagonal structures (for example, they may have square honeycomb structures). The intermediate honeycomb layer 49 formed from aluminium or aluminium alloy may be replaced by a honeycomb layer formed from any suitable material having a density less than that of titanium or titanium alloy, such as a polymeric material like NOMEX® flame-resistant meta-aramid material. The septum layers 51 and 52 may be formed from any suitable composite materials, for example fibreglass. The thickness of the septum layers may be adjusted to take into account any changes in honeycomb materials. For example, in embodiments in which the honeycomb layer 49 is formed from a polymeric material like NOMEX® flame-resistant meta-aramid material, septum layer 52 may be formed from two carbon fibre plies instead of two plies, reducing the septum layer thickness from about 3 mm to about 0.5 mm. However, in all such variations of this first example embodiment, the honeycomb layer 48 is formed from titanium or titanium alloy.

In use, the fan impact liner 45 as shown in Figure 5 absorbs a substantial proportion of the kinetic energy of an impacting projectile, such as a detached fan blade. As a projectile begins to impact the fan impact liner 45, contact with the inner septum layer 52 distributes the impact force over a broad area, such that a large portion of the honeycomb layer 49 undergoes deformation. As the honeycomb layer 49 deforms, energy is absorbed. Accordingly, the speed at which the projectile moves through the fan impact liner 45 is reduced. However, an impacting projectile such as a fan blade is not typically arrested fully in the honeycomb layer 49. Instead, as the projectile reaches the septum layer 51, the impact force is again spread over a large area of the honeycomb layer 48. Because the honeycomb layer 48 is formed from titanium or titanium alloy, which is significantly stronger than the aluminium or polymeric materials used to form the honeycomb layer 49, the cell walls of honeycomb layer 48 are more resistant to deformation and the radially outer honeycomb layer 48 is able to absorb the remaining kinetic energy of the projectile to fully arrest the projectile. The honeycomb layer 48 therefore acts as a barrier which hinders or prevents the projectile from penetrating the fan containment casing 42.

The honeycomb layer 48 formed from titanium or titanium alloy is thin relative to the non-titanium honeycomb layer 49. In particular, the honeycomb layer 48 generally constitutes less than 20 %, and preferably between 10 % and 15 %, of the total radial thickness of the fan track liner. Accordingly, despite titanium having a higher density than aluminium or polymeric materials, incorporation of the titanium honeycomb layer 48 does not lead to significant weight gains compared to previously-considered fan impact liners. In addition, because of its higher strength compared to aluminium or polymeric materials, the titanium honeycomb layer 48 is able to absorb a substantial amount of kinetic energy from an impacting projectile over a short distance. The honeycomb layer 48 is therefore able to function effectively as a ballistic barrier to impacting projectiles, despite its relative thinness. Indeed, it is the use an outboard titanium structure, which has a high crush strength and a high compressive strength compared to other commonly-used materials, which permits incorporation of a large volume of relatively lower strength inboard layers. The lower-strength inboard layers are provided primarily for their energy absorption and deformation capabilities, while the titanium structure acts as a final barrier to stop an impacting projectile. Use of a titanium honeycomb layer is estimated to reduce stress levels in the fan containment casing, on impact, by up to 40 %.

The inventors have found that the fan impact liner 45 is able to arrest impacting projectiles more effectively than known fan impact liners which do not incorporate titanium or titanium alloy layers. The fan impact liner 45 is therefore suitable for use in larger engines which make use of larger, heavier fan blades. In particular, the fan impact liner is able to reduce and spread the impact energy due to an impacting projectile, such as a fan blade, protecting the casing against ice and blade impacts and damping vibrations, thereby also reducing noise.

In an alternative second example embodiment, the fan impact liner 45 takes the structure illustrated schematically in **Figure 6** which again shows a sectional view of one portion of the fan impact liner 45 adhered to the fan containment casing 42. In this embodiment, the fan impact liner 45 includes three different layers (53, 54 and 55) of hexagonal honeycomb material: a radially outer honeycomb layer 53, an intermediate honeycomb layer 54, and a radially inner honeycomb layer. The radially outer honeycomb layer 53 is formed from aluminium or aluminium alloy and accounts for about 40 % of the total radial thickness of the fan impact liner 45. Intermediate honeycomb layer 54 is formed from an aramid polymeric material such as NOMEX® flame-resistant meta-aramid material and accounts for about 40 % of the total radial thickness of the fan impact liner 45. Radially inner honeycomb layer 55 is also formed from an aramid polymeric material such as NOMEX® flame-resistant meta-aramid material, the cells of the honeycomb being filled with a cured epoxy resin (such as those available in the Scotch-Weld line available from 3M). Radially inner honeycomb layer 55 is an abradable layer having a gas-washed exterior surface S which faces the fan blades 23. In use, the fan blade is "run-in" to cut a track in the abradable layer for good clearance.

The honeycomb layer 53 is adhered directly to the fan containment casing 42 by a layer of cured epoxy adhesive (not shown). The radially outer and intermediate honeycomb layers 53 and 54 are separated from one another by an intervening septum layer 56 formed from a sheet of titanium or a titanium alloy such as Ti-3AI-2.5V or Ti-6AI-4V. Both the radially outer and intermediate honeycomb layers 53 and 54 are adhered to the septum layer 56 by a cured epoxy adhesive. The intermediate and radially inner honeycomb layers 54 and 55 are separated from one another by an intervening composite septum layer 57 formed from carbon-fibre reinforced plies suspended in an epoxy resin matrix. Both the intermediate and radially inner honeycomb layers 54 and 55 are adhered to the septum layer 57 by a cured epoxy adhesive.

Again, it will be apparent to the skilled person that many of the materials used in the construction of the fan impact liner shown in Figure 6 may be varied without departing from the general structure of the liner. For example, the honeycomb layers 53, 54 and 55 may take any suitable honeycomb structures other than hexagonal structures (for example, they may have square honeycomb structures). Either or both of honeycomb layers 53 and 54 may be formed from aluminium, aluminium alloy, or a polymeric material like NOMEX® flame-resistant meta-aramid material. The septum layer 57 may be formed from any suitable composite material, for example fibreglass. However, in all such variations of this second example embodiment, the septum layer 56 is formed from titanium or titanium alloy.

Again, in use, the fan impact liner 45 as shown in Figure 6 absorbs a substantial proportion of the kinetic energy of an impacting projectile, such as a detached fan blade. As a projectile begins to impact the fan impact liner 45, contact with the septum layer 57 distributes the impact force over a broad area, such that a large portion of the intermediate honeycomb layer 54 is deformed. As the intermediate honeycomb layer 54 deforms, energy is absorbed. Accordingly, the speed at which the projectile moves through the fan impact liner 45 is reduced. However, an impacting projectile such as a fan blade is not typically arrested fully in the honeycomb layer 54. Instead, as the projectile reaches the septum layer 56, the impact force is again spread over a large area of the radially outer honeycomb layer 53. In addition, the septum layer 56, being formed of titanium or titanium alloy, is itself highly resistant to deformation and contributes substantially to the arresting effect of the fan impact liner. The septum layer 56, being thin, does not contribute significantly to the overall weight of the fan impact liner, despite the higher density of titanium relative to the composite materials commonly used to form septum layers.

Both of the examples embodiments of fan impact liners shown in Figures 5 and 6 may be manufactured using standard techniques for forming composite structures known in the field. For example, the various layers of honeycomb structures and septa may be assembled in the appropriate order and then cured, for example, in an oven or an autoclave. Curable adhesives, such as epoxy resins, may be used to adhere adjacent layers to one another. Composite septa may be formed by laying up reinforcing fibre plies impregnated with adhesive, followed by curing. The fan impact liner 45 and the fan containment casing 42 may be manufactured separately, followed by adhering the fan impact liner to an inboard surface of the fan containment casing. Alternatively, the various layers of the fan impact liner 45 and the fan containment casing 42 may assembled and cured together.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

**Claims**

1. A fan containment arrangement (41) for a gas turbine engine (10) comprising:

   a fan containment casing (42); and
   a fan track liner (45) radially within the fan containment casing (42) and extending radially inwardly from the fan containment casing (42) to a gas-washed surface delimiting a gas path for a fan (23);
   wherein the fan track liner (45) comprises an impact resistant layer (48, 56) formed from titanium or titanium alloy, wherein no greater than about 20 % of the radial thickness of the fan track liner (45) is formed from titanium or titanium alloy, and (i) the fan track liner (45) comprises first and second cellular impact structures (48, 49) separated from one another by a first septum layer (51), the first cellular impact structure (48) being the impact resistant layer (48) formed from titanium or titanium alloy, or (ii) the impact resistant layer (56) formed from titanium or titanium alloy is a septum layer (56), separating the first and second cellular impact structures (53, 54).

2. The fan containment arrangement (41) of claim 1, wherein the impact resistant layer (48) formed from titanium or titanium alloy is a cellular impact structure (48) formed from titanium or titanium alloy.

3. The fan containment arrangement (41) of claim 2, wherein the cellular impact structure (48) formed from titanium or titanium alloy constitutes from about 10 % to about 20 %, of the radial thickness of the fan track liner (45).

4. The fan containment arrangement (41) of any preceding claim, wherein the fan track liner (45) comprises first and second cellular impact structures (48, 49) separated from one another by a first septum layer (51), the first cellular impact structure (48) being the impact resistant layer (48) formed from titanium or titanium alloy.

5. The fan containment arrangement (41) of claim 4, wherein the first cellular impact structure (48) is a radially outboard cellular impact structure (48) and the second cellular impact structure (49) is a radially inboard cellular impact structure (49).

6. The fan containment arrangement (41) of claim 4 or 5, wherein one or each of the first cellular impact structure (48) and the second cellular impact structure (49) is a honeycomb structure.

7. The fan containment arrangement (41) of any one of claims 4 to 6, wherein the second cellular impact structure (49) is formed from aluminium, aluminium alloy or a polymeric material such as an aramid polymeric material.

8. The fan containment arrangement (41) of any one of claims 4 to 7, wherein the second cellular impact structure (49) constitutes from about 70 % to about 80 % of the radial thickness of the fan track liner (45).

9. The fan containment arrangement (41) of any one of claims 4 to 8 further comprising an abradable structure (50) separated from the second cellular impact structure (49) by a second septum layer (52).

10. The fan containment arrangement (41) of any one of claims 4 to 9, wherein the first and/or second septum layers (51, 52), where present, are formed from fibre-reinforced polymer material.

11. The fan containment arrangement (41) of claim 1, wherein the impact resistant layer (56) formed from titanium or titanium alloy is a septum layer (56), formed from titanium or titanium alloy, separating the first and second cellular impact structures (53, 54).

12. The fan containment arrangement (41) of claim 11, wherein the septum layer (56) formed from titanium or titanium alloy is a sheet (56) of titanium or titanium alloy.

13. The fan containment arrangement (41) of any preceding claim, wherein the impact resistant layer (48, 56) is formed from a titanium alloy comprising titanium, aluminium and vanadium, such as Ti-3Al-2.5V or Ti-6Al-4V.

14. The fan containment arrangement (41) of any preceding claim, wherein titanium or titanium alloys account for no greater than about 30 % of the total weight of the fan track liner (45).

15. A gas turbine engine (10) comprising a fan containment arrangement (41) of any one of claims 1 to 14.

FIG. 1

FIG. 2

*FIG. 3*

*FIG. 4*

FIG. 5

FIG. 6

Europäisches
Patentamt

European
Patent Office

Office européen
des brevets

# EUROPEAN SEARCH REPORT

Application Number

EP 19 20 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 096 269 A2 (ROLLS ROYCE PLC [GB])<br>2 September 2009 (2009-09-02)<br>* paragraph [0019]; figure 1 *<br>* paragraph [0020] - paragraph [0023]; figure 2 * | 1,2,4-7, 13,15<br>3,8-12 | INV.<br>F01D21/04<br>F02C7/045<br>F04D29/52 |
| X<br>A | EP 1 857 655 A2 (ROLLS ROYCE PLC [GB])<br>21 November 2007 (2007-11-21)<br>* paragraph [0021] - paragraph [0025]; figure 4 *<br>* paragraph [0031] * | 1,2,4-7, 9,10,13<br>3,8,14 | |
| X<br>A | EP 2 711 556 A2 (ROLLS ROYCE PLC [GB])<br>26 March 2014 (2014-03-26)<br>* paragraph [0039] - paragraph [0047]; figure 2 * | 1,11-13, 15<br>2-7,9 | |
| A | GB 2 365 925 A (ROLLS ROYCE PLC [GB])<br>27 February 2002 (2002-02-27)<br>* page 10, line 32 - line 34; figures 1-4 *<br>* page 4, line 21 - page 6, line 22; figures 1-4 * | 1,2,4,5, 7,12,15 | |
| A | EP 2 597 270 A2 (ROLLS ROYCE PLC [GB])<br>29 May 2013 (2013-05-29)<br>* paragraph [0037] - paragraph [0045]; figures 1,2 * | 1,2,11, 15 | TECHNICAL FIELDS SEARCHED (IPC)<br><br>F01D<br>F02K<br>F02C<br>F04D |

The present search report has been drawn up for all claims

| Place of search | Date of completion of the search | Examiner |
|---|---|---|
| Munich | 19 March 2020 | Di Giorgio, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 5052

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2020

| Patent document cited in search report | | Publication date | Patent family member(s) | | Publication date |
|---|---|---|---|---|---|
| EP 2096269 | A2 | 02-09-2009 | EP<br>US | 2096269 A2<br>2009214327 A1 | 02-09-2009<br>27-08-2009 |
| EP 1857655 | A2 | 21-11-2007 | EP<br>US | 1857655 A2<br>2007297910 A1 | 21-11-2007<br>27-12-2007 |
| EP 2711556 | A2 | 26-03-2014 | EP<br>US | 2711556 A2<br>2014271148 A1 | 26-03-2014<br>18-09-2014 |
| GB 2365925 | A | 27-02-2002 | NONE | | |
| EP 2597270 | A2 | 29-05-2013 | EP<br>US | 2597270 A2<br>2013336761 A1 | 29-05-2013<br>19-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4377370 A

- EP 1336739 A